Europäisches Patentamt

European Patent Office

Office européen des brevets

(19)

(11) Veröffentlichungsnummer: **0 310 554**
**A1**

(12) **EUROPÄISCHE PATENTANMELDUNG**

(21) Anmeldenummer: **88810645.7**

(22) Anmeldetag: **21.09.88**

(51) Int. Cl.⁴: **C 01 F 7/06**
**B 01 D 13/02**

(30) Priorität: **01.10.87 CH 3816/87**

(43) Veröffentlichungstag der Anmeldung:
**05.04.89 Patentblatt 89/14**

(84) Benannte Vertragsstaaten:
**DE ES FR GB GR IT**

(71) Anmelder: **SCHWEIZERISCHE ALUMINIUM AG**
**CH-3965 Chippis (CH)**

(72) Erfinder: **Brown, Gregory P.**
**Banyan Street 13**
**Nhulunbuy, N.T. 5797 (AU)**

**Tschamper, Otto**
**Buchenweg 10**
**CH-8604 Volketswil (CH)**

(54) Verfahren zur Verringerung von Verunreinigungen in Laugen beim Bayer-Prozess.

(57) Bei Verfahren zur Verringerung der gelösten anorganischen und organischen Verunreinigungen in wässrigen Laugen beim Bayer-Prozess zur Herstellung von Aluminiumhydroxid werden Zusätze verwendet, die aufwendige Verfahrensführungen und einen erhöhten Laugenverbrauch notwendig machen, was die Produktionskosten in die Höhe treibt und nicht in jedem Fall eine gute Produktqualität gewährleistet.

Diese Nachteile können verhindert werden, wenn die verunreinigte Lauge $P_v$ eine Elektrodialyse unter Verwendung von mindestens einer aus einer anionen- und einer kationenpermselektiven Membran bestehende Einheit unter Bildung einer Alkalilaugenkomponente $P_r$, welche der Kreislauflauge des BayerProzesses zugeschlagen wird, und einer Verunreinigungskomponente V, welche aus dem Prozess entfernt und verworfen wird, unterworfen wird.

Fig. 2

EP 0 310 554 A1

**Beschreibung**

### Verfahren zur Verringerung von Verunreinigungen in Laugen beim Bayer-Prozess

Die Erfindung betrifft ein Verfahren zur Verringerung der gelösten anorganischen und organischen Verunreinigungen in wässrigen Laugen beim Bayer-Prozess zur Herstellung von Aluminiumhydroxid.

Die beim Bayer-Prozess verwendeten Rohstoffe, im wesentlichen Bauxit und Natronlauge, enthalten organische und anorganische unerwünschte Substanzen, welche insbesondere während der Auflösung des Bauxits in den Bayer-Prozess eingeführt werden und in der Folge in vielfältiger Weise diesen nachteilig beeinflussen. Die Substanzen sind saure Verbindungen wie z.B. Chloride, Phosphate, Sulfate, Vanadate, Fluoride und/oder organische Salze oder Säuren, insbesondere Oxalate und Huminsäuren.

Da die Alkalilauge im Bayer-Prozess in verschiedenen Stufen auf verschieden hohen Konzentrationen im Kreislauf geführt wird, reichern sich die Verunreinigungen an verschiedenen Stellen bis zu kritischen Werten an, sofern sie nicht aus dem Prozess genommen werden. Mit den Verunreinigungen sind verfahrenstechnische als auch wirtschaftliche Probleme verbunden. Kumulativ angereichert führen sie, da sie in Form von Natriumsalzen anfallen, zu einer Reduktion der Kaustizität und des Anteils an freier Lauge, was zur Folge hat, dass die Laugenproduktivität und damit die Prozesswirtschaftlichkeit sinkt. Ferner wird die Prozessführung durch Ablagerungen der unerwünschten Stoffe an Tanks, Rohren, Wärmetauschern und sonstigen Einrichtungen behindert, so dass Reinigungsschritte durchgeführt werden müssen, um die vorgesehene Produktionsleistung wieder herzustellen. Unter Umständen können die Reinigungsschritte recht aufwendig sein, z.B. indem Säurespülungen durchgeführt werden müssen, wenn die Ablagerungen Schichtdicken erreichen, die mit mechanischen Mitteln nur unzulänglich entfernt werden können oder die Ablagerungen sich an unzugänglichen Orten befinden.

Die Prozesswirtschaftlichkeit wird ferner durch die Verunreinigungen dadurch reduziert, dass diese die Laugenviskosität erhöhen und damit die Pumpkosten steigen. Zusätzlich wird der Absetzvorgang des Hydroxids und auch des Rohschlamms und deren Abtrennung negativ beeinflusst.

Neben den oben genannten, allen Verunreinigungen gemeinsam anzulastenden Nachteilen gibt es noch eine Vielzahl weiterer Nachteile, die einzelnen Verunreinigungen zugewiesen werden. So färben die organischen Verunreinigungen, meist in Form von langkettigen Huminsäuren oder deren Derivate bzw. Reaktionsprodukte, das Aluminiumhydroxid gräulich ein. Von besonderer Bedeutung ist das während der Zersetzungsphase des Bauxits durch Lösen und Zersetzung von Humin- und anderen organischen Säuren gebildete Oxalat. Dies kann sich bis zur Uebersättigung anreichern und beim Ausscheiden die Prozesswirtschaftlichkeit negativ beeinflussen, indem es die Kristallisation des Aluminiumhydrats erschwert und zusätzlich nachteiligen Einfluss auf die physikalischen Eigenschaften der Kristallagglomerate ausübt.

Zur Veränderung kritischer Schwellenwerte der Verunreinigungen und zur Kontrolle ihrer Konzentrationen in den im Kreislauf geführten Laugen sind eine Vielzahl von Verfahren bekannt. Nach der US-PS 4 335 082 werden die Prozesslaugen mit Natriumhypochlorit oder anderen Oxidationsmitteln behandelt, um die organischen Stoffe zu zersetzen. In der DE-OS 2 415 872 wird die Zugabe von Kalziumverbindungen vorgeschlagen, um die Huminsäuren als unlösliche Kalziumverbindungen zu fällen. In ähnlicher Weise werden nach den US-PS'en 4 046 855 und 4 101 629 Fällungsreaktionen mit Magnesium- bzw. Bariumverbindungen vorgeschlagen. Die letztgenannten Verfahren können auch zur Oxalatentfernung eingesetzt werden, da die Lauge destabilisiert ist, wenn die Huminstoffe entfernt sind und dadurch das Oxalat als Natriumoxalat ausfällt. Zur Oxalatentfernung wurde ferner nach der US-PS 3 649 185 eine Erhöhung der Laugenkonzentration durch weiteren Zusatz von kaustischer Soda vorgeschlagen, wodurch das Oxalat ausfällt. In analoger Weise können auch die anorganischen Verunreinigungen ausgesalzt werden. Die Aussalzung durch Verdampfungskristallisation wurde ebenfalls früher angewendet und hat heute nur noch historische Bedeutung.

Die vorgeschlagenen Verfahren sind relativ aufwendig in der Verfahrensführung, verwenden teure Zusätze oder machen einen erhöhten Laugenverbrauch notwendig, was in jedem Fall die Produktionskosten in die Höhe treibt und nicht in jedem Fall eine gute Produktqualität gewährleistet.

Die Erfinder haben sich daher die Aufgabe gestellt, ein Verfahren vorzulegen, welches geeignet ist, die anorganischen und organischen gelösten Verunreinigungen in wässrigen Laugen beim Bayer-Prozess zur Herstellung von Aluminiumhydroxid in wirtschaftlicher Weise zu verringern und deren Konzentrationen in derart geringen Grenzen zu halten, dass sie praktisch ohne Einfluss auf den Bayer-Prozess sind.

Erfindungsgemäss wird die gestellte Aufgabe durch ein Verfahren gelöst, bei dem die Lauge einer Elektrodialyse unter Verwendung von mindestens einer aus einer anionen- und einer kationenpermselektiven Membran bestehender Einheit und unter Bildung einer Alkalilaugenkomponente, welche der Kreislauflauge des Bayer-Prozesses zugeschlagen wird, und einer Verunreinigungskomponente, welche aus dem Prozess entfernt und verworfen wird, unterworfen wird. Die Verunreinigungskomponente enthält im wesentlichen die anionischen Säurereste der Verunreinigungen, insbesondere Natriumsalze der eingangs genannten Art, aus der verunreinigten Lauge.

Vorteilhafte Weiterbildungen des erfindungsgemässen Verfahrens sind durch die Merkmale der Ansprüche 2 bis 10 gekennzeichnet.

Die Erfindung basiert auf die Anwendung von anionen- und kationenpermselektiven Membranen bei der Elektrodialyse der Alkalilauge aus dem Bayer-Prozess.

Die Anwendung des erfindungsgemässen Verfahrens ist insbesondere dann von Vorteil, wenn aus den Verunreinigungen gasförmige Reaktionsprodukte entstehen, die sich selbsttätig aus dem weiteren Bayer-Prozess entfernen. Dies ist im besonderen Masse bei der Reaktion nach der summarischen Gleichung

$$Na_2CO_3 + H_2O = 2NaOH + CO_2$$

der Fall.

Weitere Merkmale und Einzelheiten der Erfindung ergeben sich aus der Zeichnung. Diese zeigt schematisch in

Fig. 1 die Aufteilung eines verunreinigten Laugenstroms in einen gereinigten Laugenstrom und einen Strom mit Verunreinigungen,

Fig. 2 den Reaktionsablauf bei einer aus einer anionen-und einer kationenpermselektiven Membran bestehenden Zelleinheit

Fig. 3 mehrere Zelleinheiten in Reihe angeordnet

Fig. 4 den Einsatz der Elektrodialysezelle(n) im Bayer-Prozesskreislauf.

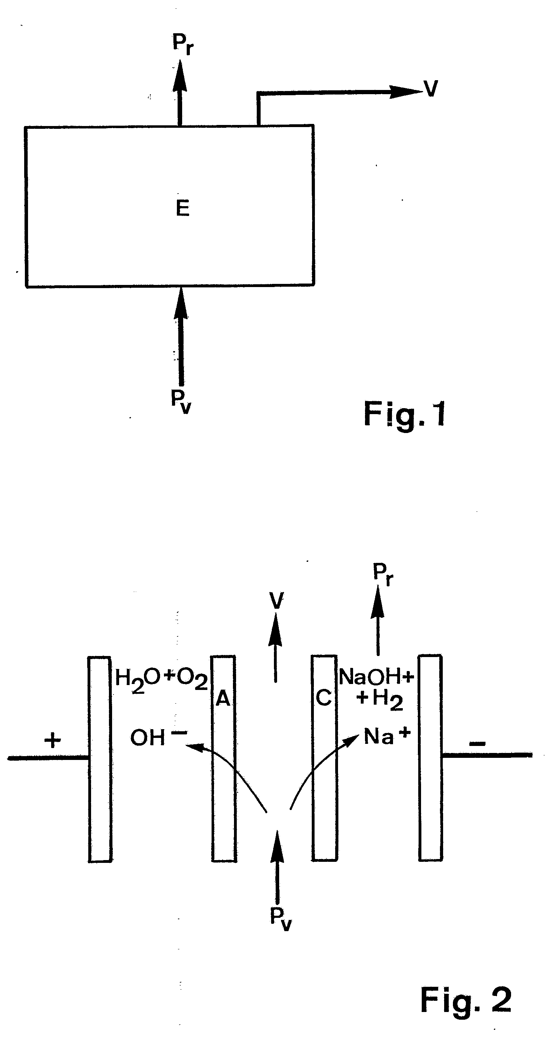

Gemäss Fig. 1 wird der mit Verunreinigungen beladene, aus dem Bayer-Prozess stammende Alkalilaugenstrom $P_v$ einer Elektrodialyse unter Verwendung vom mindestens einer anionen- und einer kationenpermselektiven Membran unterworfen. Nach der Elektrodialysezelle E erhält man einen an Verunreinigungen verarmten Laugenstrom $P_r$ und einen separaten, an Alkali verarmten Strom V, der die Verunreinigungen enthält. Durch mehrmaliges Durchlaufen des Stroms $P_v$ durch die Elektrolysezelle E bzw. bei Einwirkung einer grösseren Anzahl von Einheiten von in Reihe geschalteter Elektrolysezellen auf den Alkalilaugenstrom $P_v$ ist es möglich, eine gereinigte Lauge $P_r$ zu erhalten, die im wesentlichen den Alkaligehalt der Lauge $P_v$ aufweist.

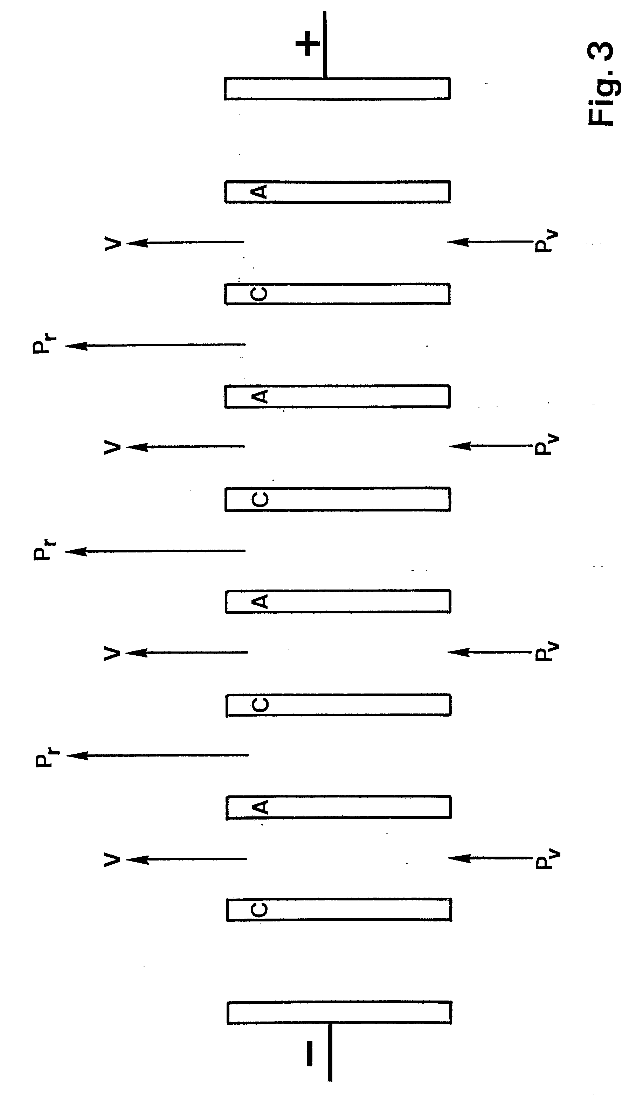

Die Figuren 2 und 3 zeigen beispielhaft mögliche Anordnungen von Elektrodialyseeinheiten gemäss der Erfindung, wobei A eine anionen- und C eine kationenpermselektive Membran kennzeichnet. Ferner ist mit Pfeilen beispielhaft und schematisch angedeutet, in welchen Zellbereichen die verunreinigte Alkalilauge $P_v$ eingeführt werden kann und aus welchen Zellbereichen entsprechende Reaktionsprodukte $P_r$, V entnommen werden können bzw. wo der/die Strom/Ströme der gereinigten Lauge $P_r$ und der/die Strom/Ströme der Verunreinigungen V anfallen. Es können die Zelleinheiten auch in Parallelanordnung oder in Kombination von Reihen- und Parallelanordnung verwendet werden.

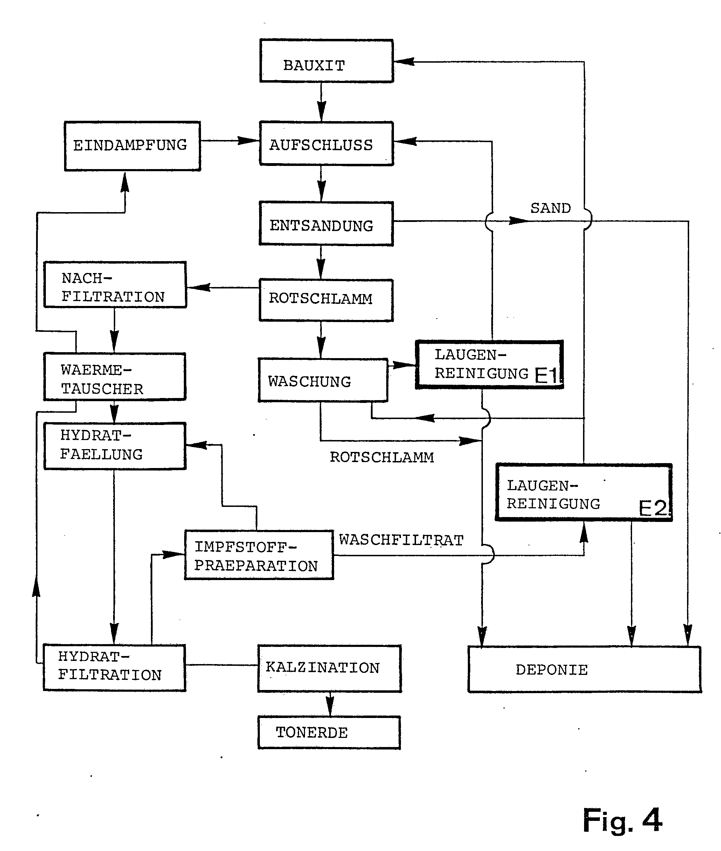

Fig. 4 zeigt in stark vereinfachter Ausführung den Kreislauf der Lauge im Bayer-Prozess und den Einsatz der Elektrodialyse $E_1$ entweder nach der Rotschlammwaschung und/oder den Einsatz der Elektrodialyse $E_2$ nach der Waschung des Impfstoffes. Selbstverständlich kann die Elektrodialyse auch an anderen Orten des Kreislaufprozesses eingesetzt werden. Es hat sich aber gezeigt, dass die vorgenannten Orte besonders bevorzugt sind, da die notwendigen Gerätschaften ohne wesentliche betriebliche Veränderungen an diesen Stellen installiert werden können und andererseits die zu reinigende Lauge verdünnt vorliegt, was der Lebensdauer der Membranen zugute kommt.

## Patentansprüche

1. Verfahren zur Verringerung der gelösten anorganischen und organischen Verunreinigungen in wässrigen Laugen beim Bayer-Prozess zur Herstellung von Aluminiumhydroxid, dadurch gekennzeichnet, dass die Lauge einer Elektrodialyse unter Verwendung von mindestens einer aus einer anionen- und einer kationenpermselektiven Membran bestehenden Einheit unter Bildung einer Alkalilaugenkomponente, welche der Kreislauflauge des Bayer-Prozesses zugeschlagen wird, und einer Verunreinigungskomponente, welche aus dem Prozess entfernt und verworfen wird, unterworfen wird.

2. Verfahren nach Anspruch 1, dadurch gekennzeichnet, dass die Elektrodialyse unter Verwendung von aus kationen-oder anionenpermselektiver Membranen bestehenden in Reihe und/oder parallel angeordneten Einheiten durchgeführt wird.

3. Verfahren nach Anspruch 1 oder 2, dadurch gekenneichnet, dass als Membranen monopolare, im wesentlichen für einwertige Ionen selektive Membranen verwendet werden.

4. Verfahren nach Anspruch 3, dadurch gekennzeichnet, dass die Membranen zwischen 65 bis 95 %, vorzugsweise 70 bis 90 %, für einwertige Ionen selektiv sind.

5. Verfahren nach einem der Ansprüche 1 bis 4, dadurch gekennzeichnet, dass die Verunreinigungen enthaltende Lauge mindestens teilweise die im Kreislauf des Bayer-Prozesses geführte, nach dem Waschen des Impfstoffes anfallende Lauge ist.

6. Verfahren nach einem der Ansprüche 1 bis 5, dadurch gekennzeichnet, dass die Verunreinigungen enthaltende Lauge mindestens teilweise die im Kreislauf des BayerProzesses geführte, nach dem Waschen des Rotschlamms anfallende Lauge ist.

7. Verfahren nach einem der Ansprüche 1 bis 6, dadurch gekennzeichnet, dass die in der Verunreinigungskomponente enthaltenen Feststoffanteile, insbesondere die Aluminium enthaltenden Anteile, vorzugsweise Aluminiumhydrat, abgetrennt werden.

8. Verfahren nach Anspruch 7, dadurch gekennzeichnet, dass die abgetrennten Aluminium enthaltenden Anteile, insbesondere Aluminiumhydrat, in den Bayer-Prozess rückgeführt werden.

9. Verfahren nach einem der Ansprüche 1 bis 8, dadurch gekennzeichnet, dass, bevor die Lauge einer Elektrodialyse unterworfen wird, diese mit Kohlendioxid behandelt wird, das dabei ausgefällte Aluminiumhydrat abgetrennt und dem Bayer-Prozess zugeführt wird.

10. Verfahren nach Anspruch 9, dadurch gekennzeichnet, dass das gegebenenfalls bei Durchführung der Elektrodialyse anfallende Kohlendioxid zur Behandlung der Lauge verwendet wird.

Fig. 1

Fig. 2

Fig. 3

EP 0 310 554 A1

Fig. 4

Europäisches
Patentamt

**EUROPÄISCHER RECHERCHENBERICHT**

Nummer der Anmeldung

EP 88 81 0645

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 075 068 (K.W. LOEST) <br> * Spalten 6,7; Anspruch 1; Figuren 2,3 * | 1,2,5 | C 01 F 7/06 <br> B 01 D 13/02 |
| | --- | | |
| A | EP-A-0 247 713 (COMINCO LTD) <br> * Seite 12, Anspruch 1 * | 3 | |
| | --- | | |
| A | CHEMICAL ABSTRACTS, Band 80, Nr. 14, 8. April 1974, Seite 223, Zusammenfassung Nr. 74053t, Columbus, Ohio, US; S.S. KORF: "Purification of spent solutions containing sodium aluminate in a three-chamber electrodialyzer", & TR. VSES. NAUCH.-ISSLED. INST. VODASNABZH., KANALIZ., GIDROTEKH. SOORUZHENII INZH. GIDROGEOL. 1972, (Pub. 1973), 40(1), 107-11 | | |
| | --- | | |
| A | CHEMICAL ABSTRACTS, Band 72, Nr. 6, 9. Februar 1970, Seite 107, Zusammenfassung Nr. 23024m, Columbus, Ohio, US; & JP-A-69 23 968 (SHOWA DENKO K.K.) 11-10-1969 | | **RECHERCHIERTE SACHGEBIETE (Int. Cl.4)** <br><br> C 01 F <br> B 01 D |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 15-12-1988 | LIBBERECHT-VERBEECK E.M. |